# EUROPEAN PATENT SPECIFICATION

(11) **EP 2 512 208 B1**
(45) Date of publication and mention of the grant of the patent: **11.01.2017**
(21) Application number: 12162536.2
(22) Date of filing: 30.03.2012
(51) Int. Cl.: H05B 33/08

(54) **Solid-state lighting device and illumination fixture using the same**
Festkörper-Beleuchtungsmittel und Beleuchtungsgerät mit Verwendung desselben
Dispositif d'éclairage à semi-conducteurs et appareil d'éclairage utilisant celui-ci

(30) Priority: 13.04.2011 JP 2011089593
(43) Date of publication of application: 17.10.2012
(73) Proprietor: Panasonic Intellectual Property Management Co., Ltd., Osaka 540-6207 (JP)
(72) Inventor: Watanabe, Koji, Osaka 540-6207 (JP); Nishimoto, Kazuhiro, Kashihara, Nara (JP); Mizukawa, Hiromitsu, Suita, Osaka (JP)
(74) Representative: Rüger, Barthelt & Abel

(56) References cited:
- EP-A1- 2 341 760
- WO-A1-2004/107546
- WO-A1-2007/141741
- US-A1- 2010 110 593

## Description

### [Field of the Invention]

The present invention relates to a solid light source lighting device for lighting a solid light source such as a light emitting diode (LED) and to an illumination fixture using the same.

### [Background Art]

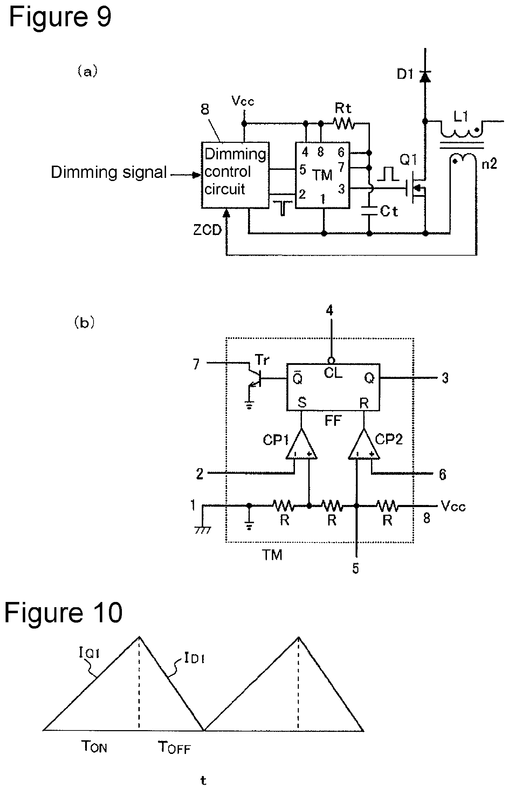

According to JPA2010-40878, an LED lighting device for controlling an electric current flowing to a light emitting diode (LED) due to a stepping-down chopper circuit that operates in a so-called critical mode. Here, as shown in Fig. 10, the critical mode is a control mode where energy accumulated in an inductance element during an on-period T_{ON} of a switching element is released during an off-period T_{OFF} of the switching element, and then the switching element is turned on again at timing when the energy releasing has completed; a power conversion efficiency is improved in comparison with other control modes. In addition, since a half of a peak value of a switching current will be an effective value of a load current, a constant current control can be easily realized.

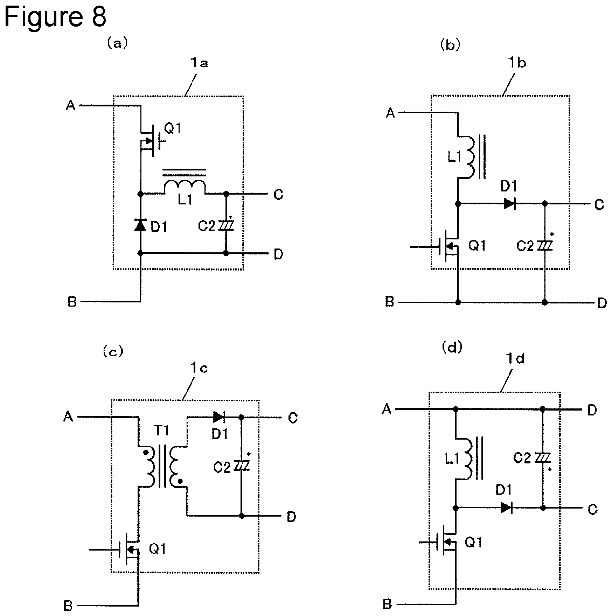

For example, the case where a switching element Q1 of a stepping-down chopper circuit 1a shown in Fig. 8(a) is operated in the critical mode will be explained. Between input terminals A and B, for example a direct-current voltage obtained by stepping up a commercial alternating-current power source with a stepping-up chopper circuit is supplied, and between input terminals C and D, an LED series circuit or a load circuit constituted by connecting the plurality of series circuits in parallel is connected. When the switching element Q1 is turned on, a current I_{Q1} shown in Fig. 10 flows via the switching element Q1, an inductor L1, and a capacitor C2 in sequence, the energy is accumulated in the inductor L1. When the switching element Q1 is turned off, a back electromotive force is generated due to the energy accumulated in the inductor L1, and then a regeneration current I_{D1} flows through a path of: the inductor L1, the capacitor C2, and a diode D1 in sequence. If the switching element Q1 is turned on again at timing when the regeneration current I_{D1} returns to zero, a switching loss is small, a pausing period of the current does not occur, and accordingly the power conversion efficiency is improved in comparison with the other control modes.

EP 2341760 A1 was published after the priority date of the present application and shows circuit for operating light emitting diodes. The circuit can be operated in a continuous or a critical or a discontinuous conduction mode. Depending on a dimming signal the switching frequency can increase to high values.

A circuit for dimming illumination devices having light emitting diodes is shown in WO 2007/141741 A1. This circuit can be operated in the continuous conduction mode or the discontinuous conduction mode. However when the switch for charging or discharging an inductor connected in series with the light emitting diodes, is turned off a predetermined delay time is used for switching the controllable switch on again. A feedback control is not provided.

### [Disclosure of the Invention]

### [Problems to be solved by the Invention]

In paragraphs 35 and 40 of JPA2010-40878, it is proposed to control under the PWM control the on-period T_{ON} of the switching element Q1 of the stepping-down chopper circuit 1a in accordance with a dimming signal from an outside. However, as known from an operation waveform in Fig. 10, when the on-period T_{ON} of the switching element Q1 is narrowed, the off-period T_{OFF} of the switching element Q1 is also narrowed in synchronization with the on-period T_{ON}, and as a result, an operation frequency of the switching element Q1 rises, thereby causing a problem that the number of times of switching is increased to increase the switching loss. In addition, when a range of the operation frequency is enlarged, it becomes hard to design a filter circuit for removing a switching noise.

The present invention is achieved in consideration of the above-mentioned points, and has a problem to provide a solid light source lighting device able to limit a range of the operation frequency of switching even when the dimming is performed in a wide range.

### [Means adapted to solve the Problems]

The problem is solved by means of solid light source lighting device according to claim land an illumination fixture according to claim 6. Advantageous embodiments are proposed in claims 2 through 5.

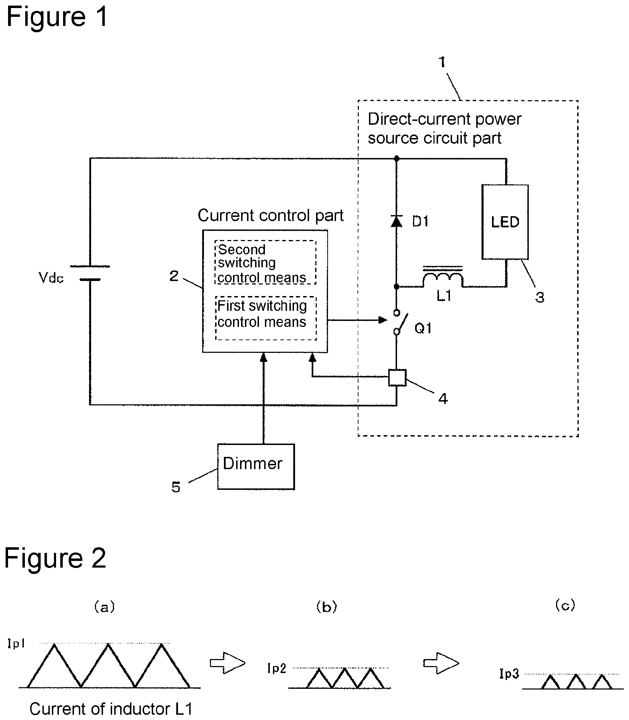

As shown in Fig. 1, a solid light source lighting device includes: a direct-current power source circuit part 1 for performing a power conversion to an input direct-current power source Vdc with use of an inductor L1 connected in series to a switching element Q1 and supplying a current to a solid light source 3 with use of charging and discharging currents of the inductor L1 or with use of any one of the currents; and a current control part 2 for controlling the switching element Q1 so as to dim a current flowing to the solid light source 3, wherein the current control part 2 includes: first switching control means adapted to vary an on-width of the switching element Q1; and second switching control means adapted to control on-timing of the switching element Q1, and wherein the second switching control means is able to vary a time from a zero cross of the discharging current of the inductor L1 to turning-on of the switching element Q1, sets the time to be substantially same time until the level of dimming reaches a predetermined level, and operates to direct the time to be longer after the level exceeds a predetermined level.

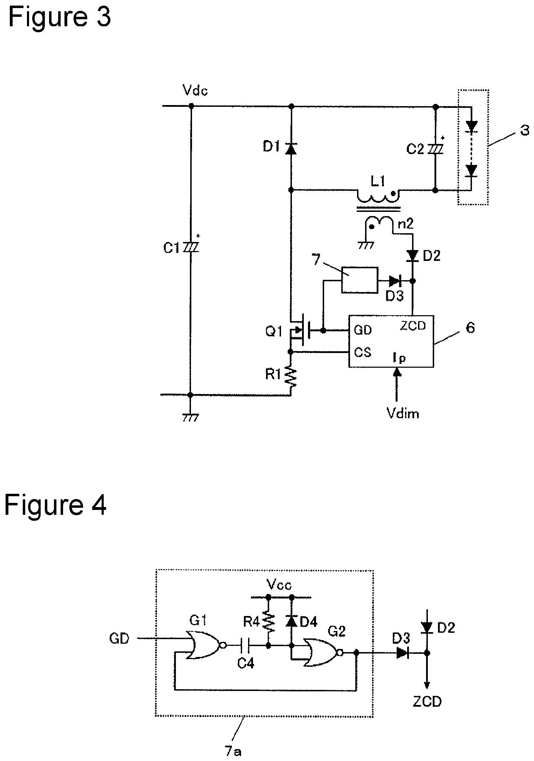

According to a further aspect of the present invention, in the solid light source lighting device according to the first aspect of the present invention, the first switching control means varies the on-width to be small in accordance with the level of dimming, and the second switching control means sets substantially same time until the level of dimming reaches the predetermined level, and after the level of dimming exceeds the predetermined level, varies the time from the zero cross of the discharging current to turning-on of the switching element Q1 so that the on-off frequency of the switching element Q1 can be substantially same as the frequency at the predetermined level (Figs. 3 to 7).

According to a further aspect of the present invention, in the solid light source lighting device according to the first aspect of the present invention, the first switching control means varies the on-width to be small until the level of dimming reaches a predetermined level, and after the level of dimming exceeds the predetermined level, operates so that the on-width can be substantially same as the on-width at the predetermined level, and the second switching control means sets substantially same time until the level of dimming reaches a predetermined level, and after the level of dimming exceeds the predetermined level, varies the time from the zero cross of the discharging current to turning-on of the switching element Q1 so that the on-off frequency of the switching element Q1 can be directed to be lower than the frequency at the predetermined level (Fig. 9).

According to a further aspect of the present invention, in the solid light source lighting device according to the first or second aspect of the present invention, the first switching control means varies the on-width to be small in accordance with the level of dimming, and the second switching control means sets substantially same time until the level of dimming reaches a predetermined level, and after the level of dimming exceeds the predetermined level, varies the time from the zero cross of the discharging current until turning-on of the switching element Q1 so that the on-off frequency of the switching element Q1 can be substantially same as the frequency at the predetermined level, and when the level of dimming exceeds a second predetermined level at which a lower light flux than the predetermined level is obtained, the first switching control means operates so that the on-width can be substantially same as the on-width at the second predetermined level, and the second switching control means varies the time from the zero cross of the discharging current to turning-on of the switching element Q1 so that the on-off frequency of the switching element Q1 can be directed to be lower than the frequency at the second predetermined level (Fig. 9).

According to a further aspect of the present invention, in the solid light source lighting device according to any one of the first to fourth aspects of the present invention, the second switching control means sets the time from the zero cross of the discharging current to turning-on of the switching element Q1 to be substantially zero until the level of dimming reaches the predetermined level (refer to Figs. 2(a) and 2(b)).

A further aspect of the present invention is an illumination fixture including the solid light source lighting device according to any one of first to fifth aspects of the present invention.

### [Effect of the Invention]

According to the present invention, in the solid light source lighting device using a switching power source,
first switching control means adapted to vary an on-width of the switching element; and second switching control means adapted to control on-timing of the switching element are included, and the second switching control means is able to vary a time from a zero cross of the discharging current of the inductor to turning-on of the switching element, sets the time to be substantially same time until the level of dimming reaches the predetermined level, and operates to direct the time to be longer after the level exceeds the predetermined level, and accordingly an effect to limit the range of the operation frequency of switching even when the dimming is performed in a wide range.

### [Brief Description of the Drawings]

[Fig. 1] Fig. 1 is a circuit diagram showing a schematic configuration according to a first embodiment of the present invention.
[Fig. 2] Fig. 2 is an operation waveform of the first embodiment according to the present invention.
[Fig. 3] Fig. 3 is a circuit diagram according to a second embodiment of the present invention.
[Fig. 4] Fig. 4 is a circuit diagram of main section according to the second embodiment of the present invention.
[Fig. 5] Fig. 5 is a circuit diagram of main section according to a third embodiment of the present invention.
[Fig. 6] Fig. 6 is a circuit diagram according to a fourth embodiment of the present invention.
[Fig. 7] Fig. 7 is a circuit diagram according to a fifth embodiment of the present invention.
[Fig. 8] Fig. 8 is a circuit diagram showing a configuration example of a direct-current power source circuit part used in the present invention.
[Fig. 9] Fig. 9 is a circuit diagram of main section according to an eighth embodiment of the present invention.
[Fig. 10] Fig. 10 is an operation waveform chart of a conventional example.

### [Best Mode for Carrying Out the Invention]

### (First embodiment)

Fig. 1 is a circuit diagram according to a first embodiment of the present invention. To an input direct-current power source Vdc, a direct-current power source circuit part 1 is connected. The direct-current power source circuit part 1 is a switching power source circuit for performing power conversion of the input direct-current power source Vdc with use of a switching element Q1 to supply a direct-current to a solid light source 3 such as an LED (or an organic EL element), and here employs a stepping-down chopper circuit (a back converter).

A configuration of the stepping-down chopper circuit is commonly known, and a series circuit including: the solid light source 3, an inductor L1, the switching element Q1 is connected between a positive electrode and a negative electrode of the input direct-current power source Vdc, and to the series circuit including the solid light source 3 and inductor L1, a regeneration diode D1 is connected in parallel so as to configure a closed circuit.

An operation of the stepping-down chopper circuit is also commonly known, when the switching element Q1 is turned on, a gradually-increasing current flows in a path of: the positive electrode of the input direct-current power source Vdc, the solid light source 3, the inductor L1, the switching element Q1, the current detection part 4, and the negative electrode of the input direct-current power source Vdc in series, and accordingly energy is accumulated in the inductor L1. When the switching element Q1 is turned off, a gradually-decreasing current flows due to an inducted voltage of the inductor L1 in a path of: the inductor L1, the regeneration diode D1, the solid light source 3, and the inductor L1, and thus the energy of the inductor L1 is released.

An operation where the switching element Q1 is turned on before completion of the energy releasing from the inductor L1 is called a continuous mode, an operation where the switching element Q1 is turned on at timing of the completion of the energy releasing from the inductor L1 is called a critical mode, and an operation where the switching element Q1 is turned on through a pausing period after the completion of the energy releasing from the inductor L1 is called a discontinuous mode. Among of them, the critical mode has a highest power conversion efficiency.

The switching element Q1 is turned on and off at a high frequency by a current control part 2. When the switching element Q1 is turned on, the gradually-increasing current flowing to the switching element Q1 is detected by a current detection part 4. A current detection value detected by the current detection part 4 is compared to a predetermined threshold value set by the current control part 2. When the current detection value reaches the predetermined threshold value, the switching element Q1 is turned off. In this manner, a peak value of the current flowing to the switching element Q1 is set to the predetermined threshold value.

Figs. 2(a) to 2(c) show waveforms of the current flowing to the inductor L1 due to the on-off operation of the switching element Q1. A period where the current flowing to the inductor L1 is gradually increased is the same as that of the current flowing to the switching element Q1, and a period where the current flowing to the inductor L1 is gradually decreased is the same as that of the current flowing to the regeneration diode D1 (refer to Fig. 10).

Fig. 2(a) shows a case where a predetermined threshold value Ip1 set by the current control part 2 is high, and Fig. 2(b) shows a case where a predetermined threshold value Ip2 set is low. The predetermined threshold values Ip1 and Ip2 that are set by the current control part 2 are set in accordance with a dimming signal supplied from a dimmer 5 to the current control part 2. Figs. 2(a) and 2(b) exemplify the case where the current flowing to the inductor L1 is in the critical mode; however the mode may be the continuous mode.

Fig. 2(c) shows a case where a predetermined threshold value Ip3 set by the current control part 2 is further lower. In Fig. 2(c), the current flowing to the inductor L1 is in the discontinuous mode.

In the current control part 2, a dimming signal supplied from the dimmer 5 is read, sets a peak value of the current flowing to the switching element Q1 as shown in Figs. 2(a) to 2(c), and controls the on-off operation of the switching element Q1 in a high-frequency manner so that the current flowing to the inductor L1 can be the discontinuous mode at the dimming signal of a less value than a predetermined dimming value as shown in Fig. 2(c) or so that the current flowing to the inductor L1 can be the continuous or a critical mode at the dimming signal of the same value as the predetermined dimming value or more as shown in Figs. 2(a) and 2(b). In this manner, even in the case where the dimming is performed in a wide range, a range of the operation frequency of the switching element Q1 can be suppressed to be expanded.

### (Second embodiment)

Fig. 3 is a circuit diagram according to a second embodiment of the present invention. In the present embodiment, for a purpose of the on-off control of the switching element Q1, a controlling integrated circuit 6 including an off control function based on peak-current detection and an on control function based on zero cross detection is used. For the type of the controlling integrated circuit 6, a power factor improvement controlling IC of a stepping-up chopper circuit (for example, L6562 manufactured by ST microelectronics co., Ltd. or the similar product) can be employed.

A gate drive terminal GD outputs a gate drive signal of High/Low for controlling the switching element Q1 to be on/off. A current sense terminal CS detects a voltage between both ends of a current detection resistance R1 connected in series to the switching element Q1, and compares the voltage to a predetermined threshold value with use of an internal comparator. The predetermined threshold value can be set by a dimming voltage Vdim inputted from the outside to a peak current setting terminal Ip. A zero cross detection terminal ZCD is a terminal for controlling the switching element Q1 to be on when detecting disappearance of a voltage of a secondary wiring n2 of the inductor L1 after the switching element Q1 is turned off. Illustrations of a controlling power source terminal Vcc and of a ground terminal GND are omitted.

Meanwhile, as described above, in the case where the power factor improvement controlling IC of the stepping-up chopper circuit is used as the controlling integrated circuit 6, a terminal used for an instant amplitude detection of a pulsating current voltage (the third pin in the L6562) may be allocated as the peak current setting terminal Ip.

In the present embodiment, a timer circuit 7 and a diode D3 are connected between the gate drive terminal GD and the zero cross detection terminal ZCD. The diodes D3 and D2 constitute a diode OR circuit, a voltage of the zero cross detection terminal ZCD falls at later timing of both timings of: disappearance of an output of the timer circuit 7 and disappearance of a voltage of the secondary wiring n2.

When the timing of disappearance of the voltage of the secondary wiring n2 is later than the other timing, the operation is in the critical mode as shown in Figs. 2(a) and 2(b), and when the timing of disappearance of the output of the timer circuit 7 is later than the other timing, the operation is in the discontinuous mode as shown in Fig. 2(c).

First, an operation of the critical mode shown in Figs. 2(a) and 2(b) will be explained. In the following explanation of the operation, when the switching element Q1 1 is turned off, the output of the timer circuit 7 disappears first, and then the voltage of the secondary wiring n2 disappears.

When the operation of the controlling integrated circuit 6 starts after the power source is turned on, the gate drive terminal GD is in a High level due to an incorporated starter, and accordingly the switching element Q1 is turned on. Then, the gradually-increasing current flows in a path of: a positive electrode of the capacitor C1, the capacitor C2, the inductor L1, the switching element Q1, the current detection resistance R1, and a negative electrode of the capacitor C1 in series. When a current detection value detected by the current detection resistance R1 reaches a predetermined threshold value, a flip-flop in the IC is reversed, and accordingly the gate drive terminal GD is in a Low level. In this manner, the switching element Q1 is turned off.

When the switching element Q1 1 is turned off, a regeneration current flows due to an accumulated energy of the inductor L1 in a path of: the inductor L1, the regeneration diode D1, the capacitor C2, and the inductor L1 in series. While the regeneration current flows, a voltage is generated in the secondary wiring n2 of the inductor L1 in a forward direction of the diode D2. When the voltage disappears, the flip-flop in the IC detects a voltage falling of the zero cross detection terminal ZCD to be reversed, and thus the gate drive terminal GD is in a High level. In this manner, the switching element Q1 is turned on.

Subsequently, the same operation is repeated, and then, as shown in Figs. 2(a) and 2(b), the current flowing to the inductor L1 is in the critical mode. In addition, the peak values Ip1 and Ip2 of the current flowing to the inductor L1 become a value set by the dimming voltage Vdim inputted from the outside to the peak current setting terminal Ip.

Next, the operation of the discontinuous mode shown in Fig. 2(c) will be explained. When the dimming voltage Vdim inputted from the outside to the peak current setting terminal Ip is lowered and the peak value of the current flowing to the inductor L1 is lowered, the accumulated energy of the inductor L1 becomes small, and accordingly the disappearance timing of the voltage of the secondary winding n2 becomes earlier. Meanwhile, the counted time of the timer circuit 7 is constant, and the output of the timer circuit 7 disappears after a certain time from the rising or falling of the gate voltage of the switching element Q1.

Accordingly, when the peak value of the current flowing to the inductor L1 is lowered like the Ip3 of Fig. 2(c), a state where a flyback voltage of the secondary wiring n2 disappears first and, after that, the output of the timer circuit 7 disappears comes. In this case, even when the regeneration current of the inductor L1 has disappeared, the output of the timer circuit 7 via the diode D3 is detected as a pseudo flyback voltage, and accordingly the controlling integrated circuit 6 is not informed of causing of the zero cross; consequently the switching Q1 stands by remaining in the off state. Then, at the timing of disappearance of the output via the diode D3 from the timer circuit 7, the controlling integrated circuit 6 determines the disappearance of the flyback voltage due to the falling of the voltage of the zero cross detection terminal ZCD, and thus the switching element Q1 is turned on. In this manner, the current flowing to the inductor L1 is into the discontinuous mode having the pausing period as shown in Fig. 2(c).

If the peak value at the Ip2 of Fig. 2(b) of the current flowing to the inductor L1 1 is a predetermined dimming value at which the critical mode and the discontinuous mode are switched, as shown in Figs. 2(a) and 2(b), while the peak value of the current of the inductor L1 is the Ip1 and the Ip2, the operation is into the critical mode due to the turning-on of the switching element Q1 at the timing of the signal disappearance of the secondary winding n2 via the diode D2, and as shown in Figs. 2(b) and 2(c), while the peak value of the current of the inductor L1 is the Ip2, the Ip3, and zero, the operation is into the discontinuous mode due to the turning-on of the switching element Q1 at the timing of the signal disappearance of the timer circuit 7 via the diode D3.

The specific configuration of the timer circuit 7 is limited, for example, if the timer circuit 7 is configured as shown in Fig. 4, an output of a timer circuit 7a is into a High level at the rising of the gate voltage of the switching element Q1, and after a certain time has passed from the timing, the timer circuit 7a operates so that the output can be into a Low level. In this case, the shortest on-off period of the switching element Q1 (that is, the upper limit value of the operation frequency) is consequently regulated by the timer circuit 7a.

The operation of the timer circuit 7a will be explained below. When the level of the gate drive terminal GD changes from a Low level to a High level, an output of a NOR gate G1 is into a Low level accordingly, an input of a NOR gate G2 is also into a Low level via a capacitor C4, and the output of the NOR gate G2 is into a High level. In this manner, since the other input of the NOR gate G1 is also into a High level, the output of the NOR gate G1 is maintained in a Low level even when the gate drive terminal GD is into a Low level after that. Under the condition, the capacitor C4 is charged via a resistance R4 from the controlling power source voltage Vcc. When a voltage of the capacitor C4 reaches a threshold voltage of the NOR gate G2 (normally Vcc/2), the output of the NOR gate G2 is into a Low level.

On this occasion, if the gate drive terminal GD is already in a Low level, the output of the NOR gate G1 is into a High level; accordingly an electric charge of the capacitor C4 is discarded via a diode D4, and the next time-counting operation is prepared.

In addition, if the on-time of the switching element Q1 is long, and even in the case where the gate drive terminal GD does not still return to a Low level at the time when the output of the NOR gate G2 returns to a Low level, the trigger does not occur again because the capacitor C4 is not reset at the timing. After that, at the timing when the gate drive terminal GD returns to a Low level, the output of the NOR gate G1 is into a High level, and the capacitor C4 is reset via the diode D4 consequently. Since the output of the NOR gate G2 does not change even in the resetting, an output pulse of the timer circuit 7a is outputted only once after the level of the gate drive terminal GD is changed from a Low level to a High level.

As described above, after the level of the gate drive terminal GD is changed from a Low level to a High level, the output of the NOR gate G2 is in a High level until a delay time has passed, the delay time being determined on the basis of: time constants of the capacitor C4 and the resistance R4; and the threshold voltage of the NOR gate G2. In this manner, the shortest on-off period of the switching element Q1 (that is, the upper limit value of the operation frequency) is regulated.

According to the present embodiment, since the upper limit value of the operation frequency of the switching element Q1 is fixed to the highest switching frequency regulated by the timer circuit 7a, a filter circuit for removing a switching noise can be easily designed.

In addition, when the dimming output is large (bright), as shown in Fig. 2(a), the number of switching times of the switching element Q1 is small, and further the operation is in the critical mode; accordingly it is possible to suppress a switching loss to be extraordinary low.

Moreover, when the dimming output is small (dark), as shown in Fig. 2(c), the pausing period is provided to the current of the inductor L1, and accordingly the number of switching times of the switching element Q1 can be prevented from being indefinitely increased; thus the switching loss can be suppressed to be increased. Additionally, the pausing period of the current of the inductor L1 becomes long as the peak value Ip3 is lowered, and accordingly even in the case where a controllable range on a lower limit side of the peak value Ip3 is limited, an effect that a dimming lower limit can be set lower without being restricted to that.

### (Third embodiment)

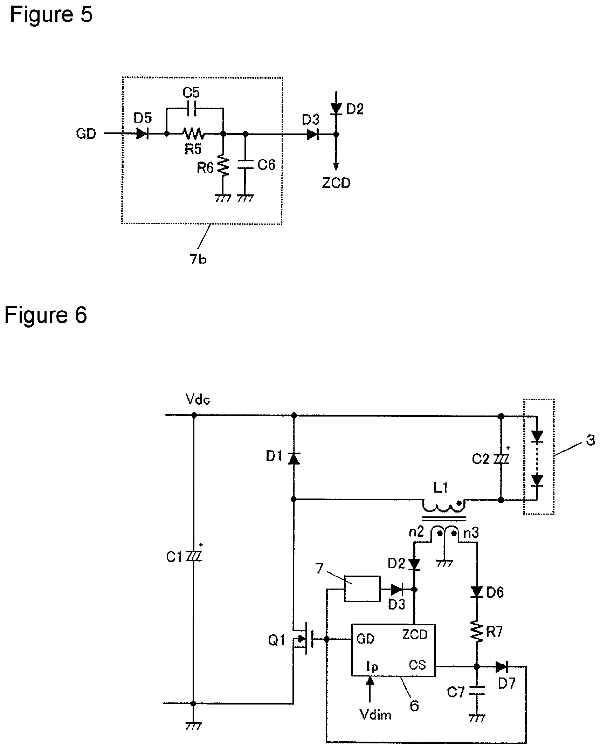

Fig. 5 is a circuit diagram of main section according to a third embodiment of the present invention. The present embodiment is an example that employs a timer circuit 7b of Fig. 5 as the timer circuit 7 of Fig. 3. The timer circuit 7b of Fig. 5 operates so that the output can be lowered to the zero cross detection level of the zero cross detection terminal ZCD after a certain time not from the rising of the gate voltage of the switching element Q1 (at the on-timing) but from the falling of the gate voltage (at the off-timing). Accordingly, in the present embodiment, a shortest width of the off-time of the switching element Q1 is regulated by the timer circuit 7b.

The timer circuit 7b includes: a series circuit of capacitors C5 and C6; resistances R5 and R6 each connected to the capacitors C5 and C6 in parallel; and a diode D5 for supplying a charging current to the series circuit of the capacitors C5 and C6. A voltage of the capacitor C6 is inputted to the zero cross detection terminal ZCD of the controlling integrated circuit 6 via between an anode and cathode of the diode D3.

During the on-period of the switching element Q1, the gate drive terminal GD of the controlling integrated circuit 6 is into a High level, and accordingly the series circuit of the capacitors C5 and C6 is charged via the diode D5. The charging voltage is transiently determined on the basis of a partial voltage ratio between the capacitors C5 and C6, and is statically determined on the basis of a partial voltage ratio between the resistances R5 and R6; however, the partial voltage ratio between the capacitors C5 and C6 and the partial voltage ratio between the resistances R5 and R6 are the same each other here. In this manner, at the moment when the switching element Q1 is turned on, the charging voltage of the capacitor C6 becomes an initial setting voltage k × Vg obtained by dividing a gate drive voltage Vg of the gate drive terminal GD with a predetermined partial voltage ratio k (0 < k < 1), and is maintained to the initial setting voltage until the moment when the switching element Q1 is turned off.

When the switching element Q1 is turned off, since the diode d5 is inversely biased to be in a blocking state, an electric charge of the capacitor C5 is discharged via the resistance R5, and an electric charge of the capacitor C6 is discharged via the resistance R6. A voltage of the capacitor C6 becomes a voltage that, starting from the above-mentioned initial setting voltage k × Vg, exponentially attenuates in accordance with time constants of the capacitor C6 and resistance R6. After the switching element Q1 is turned off, in the case where the voltage of the secondary winding n2 via the diode D2 is already disappeared at the timing when a predetermined off-time has passed, a pseudo zero cross is detected by the zero cross detection terminal ZCD in response to the disappearance of the voltage of the capacitor C6 via the diode D3, and thus the switching element Q1 is turned on again.

Accordingly, in the case of employing the timer circuit 7b of Fig. 5 as the timer 7 of Fig. 3, the shortest width of the off-time of the switching element Q1 is a fixed time determined on the basis of the time constants of the capacitors C5 and C6 and the resistances R5 and R6.

According to the present embodiment, also after being into the discontinuous mode as shown in Fig. 2(c), the operation frequency of the turning on/off of the switching element Q1 continues to increase as the on-time is reduced in accordance with the lowering of the peak current Ip3; however, the increasing of the operation frequency becomes slow because the off-time is fixed by the timer circuit 7b. Finally, even when the on-time of the switching element Q1 becomes almost zero, the switching frequency does not become shorter than the off-time of the switching element Q1, and accordingly indefinite increasing of the operation frequency does not happen. In this manner, since a range of the switching frequency is limited, the filter circuit for removing a switching noise can be easily designed. In addition, it is possible to suppress the increasing of a switching loss.

Meanwhile, in the second and third embodiments, the threshold value Ip for the peak current detection of the controlling integrated circuit 6 variable; however, the value may be a fixed value. In that case, the circuit may be configured so as to execute equivalently the same operation as that where the threshold value Ip is variable by superimposing a bias voltage depending on the dimming voltage Vdim to a detection voltage of the current detection resistance R1 connected in series to the switching element Q1 or by setting a resistance value of the current detection resistance R1 itself to be variable in accordance with the dimming voltage Vdim. In addition, instead of the current detection resistance R1, alternative means described in the following embodiments 4 and 5 may be employed.

### (Fourth embodiment)

Fig. 6 is a circuit diagram according to a fourth embodiment of the present invention. In the present embodiment, the current detection resistance R1 of Fig. 3 is omitted, and a third winding n3 is provided to the inductor L1 instead thus the current flowing to the switching element Q1 is equivalently detected as a voltage of a capacitor C7 by integrating in time an output voltage on a forward side of the winding.

The principle will be explained below. When the switching element Q1 is turned on, e1 = L1/(di/dt) can be satisfied where a voltage applied to the inductor L1 is e1 and where a current flowing to the switching element Q1 is i. On this occasion, the voltage generated in the third winding n3 satisfies e3 = (n3/n1) e1 where the wiring number of the first winding of the inductor L1 is n1. When the expression is integrated in time t, ∫(e3)dt = (n3/n1) L1·i + C is obtained. Here, C is an integral constant; however, an initial value of a current i flowing to the switching element Q1 is zero in the critical mode shown in Figs. 2(a) and 2(b) or in the discontinuous mode shown in Fig. 2(c), and accordingly the integral constant C = 0 is obtained. Thus, when the voltage on the forward side generated in the third winding n3 is integrated in time, the current i flowing to the switching element Q1 can be read.

The time integration can be accurately obtained with use of the Miller integrator; however, for simplification, the time integration is here performed by a CR integration circuit including a resistance R7 and the capacitor C7. The diode D6 is provided to integrate only the voltage on the forward side generated in the third winding n3, and the diode D7 is provided to initialize the capacitor C7.

A circuit operation will be explained below. When the switching element Q1 is turned on, the gradually-increasing current flows in a path of: the positive electrode of the capacitor C1, the capacitor C2, the inductor L1, the switching element Q1, and the negative electrode of the capacitor C1 in series. On this occasion, the voltage e3 proportional to the voltage applied to the inductor L1 generates in the third winding n3. The capacitor C7 is charged by the voltage e3 via the diode D6 and the resistance R7. At this moment, since the gate drive terminal Gd is in a High level, the diode D7 is in the blocking state.

The voltage increasing of the capacitor C7 is monitored by the current sense terminal CS; when the detection voltage exceeds a predetermined threshold value set by the peak current setting terminal Ip, the gate drive terminal GD is into a Low level, and the switching element Q1 is turned off. On this occasion, the capacitor C7 is discharged via the diode D7, and thus the time integration value of the capacitor C7 is reset.

In the present embodiment, in comparison with the circuit of Fig. 3, the current detection resistance R1 is omitted, and accordingly there is an advantage that can reduce the power loss. In addition, even in the case where power variation and a load variation happen, the voltage of the third winding n3 also varies due to a variation of the voltage applied to the inductor L1 at the on-time of the switching element Q1, the variation can be detected as a variation of an increasing speed of the voltage of the capacitor C7, and accordingly the function of the current detection resistance R1 can be substantially substituted.

### (Fifth embodiment)

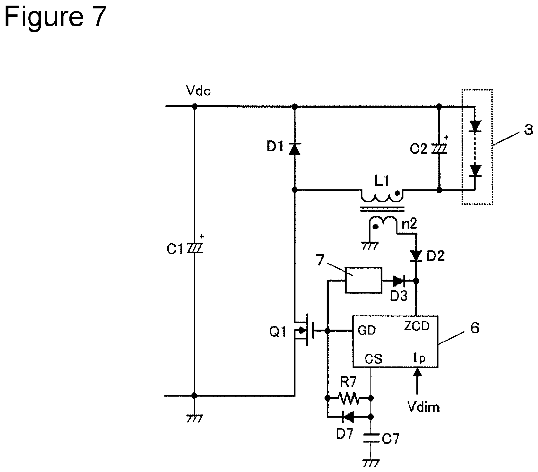

Fig. 7 is a circuit diagram according to a fifth embodiment of the present invention. In the present embodiment, the current detection resistance R1 of Fig. 3 is omitted, and instead by integrating the gate drive voltage outputted from the gate drive terminal GD in time, the current flowing to the switching element Q1 is detected as a pseudo value of the voltage of the capacitor C7.

When the switching element Q1 is turned on, the gate drive terminal GD is in a High level, and accordingly the diode D7 is in the blocking state; the capacitor C7 is charged via the resistance R7.

The voltage increasing of the capacitor C7 is monitored by the current sense terminal CS; when the detection voltage exceeds a predetermined threshold value set by the peak current setting terminal Ip, the gate drive terminal GD is into a Low level, and the switching element Q1 is turned off. On this occasion, since the gate drive terminal GD is into a Low level of low impedance, the capacitor C7 is discharged via the diode D7, and thus the time integration value of the capacitor C7 is reset.

In the present embodiment, even when the power variation and the load variation has happened, the variations are not reflected in the voltage increasing speed of the capacitor C7; however, the control of the on-time width of the switching element Q1 can be accurately performed in accordance with the dimming voltage Vdim. Additionally, in comparison with the circuit of Fig. 6, the third winding n3 of the inductor L1 is not required, and accordingly the configuration is simplified. Moreover, in comparison with the circuit of Fig. 3, the current detection resistance R1 is omitted, and accordingly there is an advantage that can reduce the power loss.

Meanwhile, as one modified example of the present embodiment, in Fig. 7, when a configuration where: the input voltage of the peak current setting terminal Ip is set to a fixed value; and the dimming voltage Vdim from the outside is superposed to the capacitor C7 via a predetermined current-limiting resistance instead is realized, even in the case where the threshold value Ip is a fixed value, the voltage increasing speed of the capacitor C7 increases as the dimming voltage Vdim increases, and thereby the on-time of the switching element Q1 can be controlled to be shortened. As understood referring to the circuit of Fig. 3, the detection voltage of the current sense terminal CS is relatively lower in comparison with the gate drive voltage, and is a voltage at most lower by the threshold voltage of the switching element Q1 or more in comparison with the output in a High level of the gate drive terminal GD; accordingly when the switching element Q1 is turned on, the diode D7 is maintained in the blocking state. In addition, when the switching element Q1 is turned off, the gate drive terminal GD in the low impedance is into a Low level, and accordingly the diode D7 is maintained in a conductive state even when the dimming voltage Vdim is superposed to the capacitor C7 via the resistance as described above; thereby the charging of the capacitor C7 starts at timing when the gate drive terminal GD becomes a High level.

In the circuits of Figs. 3, 6, and 7, the smoothing capacitor C2 connected in parallel to the solid light source 3 may be omitted; however, if connected, the light of an illumination fixture can be prevented from flickering at a high frequency. This is effective, for example, in avoiding interference with frequencies of an infrared remote controller and of visible light communication. In addition, as in an LED lighting device whose power source is separately installed, if a load current is smoothed in the case where the power source unit is connected to an LED unit by a lead wire, there is an advantage that can reduce a high-frequency radiation noise from the lead wire.

Meanwhile, the smoothing capacitor C1 serving as the input direct-current power source Vdc is charged by a direct-current voltage obtained by, for example, rectifying a commercial alternating-current power source in full waves with use of a full-wave rectifier (not shown in the figures), and generally a filter circuit for removing high-frequency components is provided on an alternating-current input side of the full-wave rectifier. In addition, between a direct-current output side of the full-wave rectifier and the smoothing capacitor C1, a power factor improvement circuit using the stepping-up chopper circuit and the like is sometimes provided.

In the above-mentioned configuration, if an upper limit of the operation frequency of the switching element Q1 is limited as in the present invention, a filter circuit for removing the high-frequency components connected to the alternating-current input side of the full-wave rectifier can be easily designed.

### (Sixth embodiment)

In each of the above-mentioned embodiments, the circuit example where the switching element Q1 of the stepping-down circuit serving as the direct-current power source circuit part 1 is arranged on a lower potential side has been explained; however, as shown in Fig. 8(a), it is needless to say that the present invention also can be applied to the case where the switching element Q1 of the stepping-down chopper circuit 1a is arranged on a higher potential side.

In addition, various types of a switching power source circuit shown in Figs. 8(b) to 8(d) may be used as the direct-current power source circuit part 1 of the present invention. Fig. 8(b) shows an example of a stepping-up chopper circuit 1b, Fig. 8(c) shows an example of a flyback converter circuit 1c, and Fig. 8(d) shows an example of a stepping-up/down chopper circuit 1d.

Also in the case of using any one of the switching power source circuits, a control circuit for: controlling the switching element Q1 to be turned off when the current flowing to an inductive element (the inductor L1 or a transformer T1) at the on-time of the switching element Q1 or when the on-time reaches a predetermined time; and controlling the switching element Q1 to be turned on when the current flowing to the inductive element returns to zero at the off-time of the switching element Q1 or when a predetermined time counted by the timer circuit has passed is included, and by fixing a lower limit value of the on-off period or the off-time of the switching element Q1 due to the timer circuit, expansion of the switching frequency can be suppressed.

### (Seventh embodiment)

In each of the above-mentioned embodiments, the counted time of the timer circuit 7 is constant; however, the counted time of the timer circuit 7 may be variable in accordance with a level of dimming.

For example, by configuring all of or a part of the resistances constituting the time constant of the timer circuit 7 with use of variable resistances such as a light-receiving element of a photo coupler and by controlling a current of a light emitting element of the photo coupler after the level of dimming exceeds a predetermined level, a configuration where a resistance value becomes large as the dimming proceeds is prepared.

In that case, after the level of dimming exceeds the predetermined level, the time from the zero cross of the discharged current of the inductor until the turning-on of the switching element Q1 can be varied so that the on-off frequency of the switching element Q1 can be directed to be lowered as the dimming proceeds. In this control, since the dimming can be realized by lowering the on-off frequency of the switching element Q1, the on-width of the switching element Q1 may be fixed after the level of dimming exceeds the predetermined level.

Or, the dimming may be controlled by: combining a control to narrower the on-width of the switching element Q1 after the level of dimming has exceeded the predetermined level; fixing the on-width of the switching element Q1 when the level of dimming exceeds a second predetermined level providing a lower light flux than that in the above-mentioned predetermined level; and lowering the on-off frequency of the switching element Q1.

### (Eighth embodiment)

Fig. 9(a) is a circuit diagram of main section according to an eighth embodiment of the present invention. The configuration of the switching power source may be any one of those shown in Figs. 7 and 8. In the present embodiment, by setting an on-pulse width of the timer circuit TM to be variable in accordance with a control voltage (a reference voltage of a fifth pin) and by operating the timer circuit TM in a one-shot operation at variable trigger timing (falling timing of a second pin), first switching control to vary the on-width of the switching element Q1 and second switching control to control the on-timing of the above-mentioned switching element Q1 are realized.

A dimming control circuit 8 can be realized, for example, with use of a micro computer, and only has to include: an analog input port for receiving the dimming signal from the outside; an analog output port for controlling the reference voltage of the fifth pin of the timer circuit TM; a binary output port for outputting a falling trigger pulse of variable timing to the second pin of the timer circuit TM; an interruption input port (ZCD) for detecting a falling edge of an inducted voltage of the secondary winding n2 of the inductor L1. When the interruption input port (ZCD) falls, the dimming control circuit 8 executes an interruption process and outputs the falling trigger pulse to the second pin of the timer circuit TM after counting a predetermined time (≥ 0). The falling trigger pulse can be easily generated by: executing a first order to set the binary output port normally being in a High level to be into a Low level; and then immediately executing a second order to return the same port to a High level. The adequate number of NOP orders may be inserted between the first order and the second order. In this manner, the falling pulse able to the second pin of the timer circuit TM is outputted.

The timer circuit TM constitutes a one-shot multi vibrator, and the output pulse width is regulated on the basis of: time constants of a capacitor Ct and a resistor Rt; and the reference voltage of the fifth pin.

The timer circuit TM can be configured, for example, by a commonly-known timer IC (so-called 555) having an internal configuration shown in Fig. 9(b); however, if having the equivalent function, the timer circuit TM is not limited to that. A first pin is a ground terminal, and an eighth pin is a power source terminal.

A second pin is a trigger terminal, and when the terminal is lowered than a half of the voltage of the fifth pin, an internal flip-flop FF is set due to an output of a fist comparator CP1, a third pin (an output terminal) is into a High level, and a seventh pin (a discharge terminal) is into an open state.

A fourth pin is a reset terminal, and when the terminal is into a Low level, the fourth pin is into an operation stopping state, and the third pin (the output terminal) is fixed to a Low level. In the present embodiment, the timer circuit can be constantly operated by connecting the fourth pin to the power source terminal (the eighth pin); however, the fourth pin may be placed under the control of the dimming control circuit 8.

The fifth pin is a control terminal, and normally a reference voltage that is 2/3 of the power source voltage Vcc is applied to the terminal due to an incorporated bleeder resistance (a series circuit of three resistances R). In the present embodiment, the reference voltage of the fifth pin can be controlled by the dimming control circuit 8.

A sixth pin is a threshold terminal, and when the terminal becomes higher than the voltage of the fifth pin, an internal flip-flop FF is reset due to the output of the second comparator CP2, the third pin (the output terminal) is into a Low level, and the seventh pin (the discharging terminal) is into a state of being shorted to the first pin.

The timer circuit TM is externally provided with a resistance Rt and a capacitor Ct for a time constant setting, and operates as a monostable multi vibrator. When a pulse of a Low level having a short pulse width is inputted to the second pin (the trigger terminal) of the timer circuit TM, the third pin of the timer circuit TM (the output terminal)is into a High level at the falling edge, and the seventh pin (the discharging terminal) is into an open state. Accordingly, the capacitor Ct is charged via the resistance Rt for the time constant setting. When the charging voltage becomes higher than a reference voltage (the voltage of the fifth pin) compared by the second comparator CP2 of the sixth pin (the threshold terminal), the third pin (the output terminal) is into a Low level, and the seventh pin (the discharging terminal) is into a state of being shorted to the first pin. In this manner, the capacitor Ct is instantly discharged.

Accordingly, a pulse width of a pulse signal in a High level, the pulse signal being outputted from the third pin of the timer circuit TM is determined in accordance with a time required to charge the capacitor Ct from the ground potential to the reference voltage (the voltage of the fifth pin).

The pulse signal in a High level outputted from the third pin of the timer circuit TM serves as an on- drive signal of the switching element Q1. The on-time width can be controlled by the voltage of the fifth pin of the timer circuit TM, and the lower the voltage of the fifth pin becomes, the shorter the on-time width becomes.

The dimming control circuit 8 varies the reference voltage of the fifth pin by reading the dimming signal (for example, an analog voltage that increases its voltage level as the dimming proceeds) from the outside and by referring to a data table on the basis of the read value, the table being stored in an internal memory, and thereby setting the on-pulse width of the switching element Q1 in accordance with the dimming level. In addition, after detecting the zero cross of the discharging current of the inductor Ill, the dimming control circuit 8 sets a delay time (>_0) until the falling trigger pulse is given to the second pin of the timer circuit TM.

### (A first preferred control example)

For example, until the level of dimming reaches a predetermined level, the on-width of the switching element Q1 is varied so as to be small as the dimming proceeds, and when the level of dimming exceeds a predetermined level, the on-width of the switching element Q1 is controlled so as to be substantially same as the on-width at the above-mentioned predetermined level. In addition, the delay time until the falling trigger pulse is given to the second pin of the timer circuit TM after detecting the zero cross of the discharging current of the inductor L1 is substantially same (for example, 0) until the level of dimming reaches the predetermined level, and the operation is in the critical mode or in the discontinuous mode close to the critical mode (Claim 5). Then, after the level of dimming exceeds the predetermined level, a time from the zero cross of the discharging current until the switching element Q1 is turned on is controlled to be gradually long so that the on-off frequency of the switching element Q 1 can be directed to be lower than the frequency at the above-mentioned predetermined level (Claim 3). In this control, even when the lower limit of the on-width of the switching element Q1 is a limitation of control, the dimming can be further proceeded.

### (A second preferred control example)

In addition, as a further preferred control example, the control until the level of dimming reaches a predetermined level is the same as that of the first control example, and after the level of dimming exceeds a predetermined level, the time from the zero cross of the discharging current of the inductor L1 until the switching element Q1 is turned on is varied so that the on-off frequency of the switching element Q1 cab be substantially same as the frequency at the above-mentioned predetermined level, continuing control to vary the on-width of the switching element Q1 so as to be small as the dimming proceeds (Claim 2). Moreover, when the level of dimming exceeds a second predetermined level at which a lower light flux than that at the above-mentioned predetermined level is obtained, the on-width of the switching element Q1 is controlled so as to be substantially same as the on-width at the above-mentioned second predetermined level, and the delay time until the falling trigger pulse is given to the second pin of the timer circuit TM after the zero cross of the discharging current of the inductor L1 is detected is controlled so that the on-off frequency of the switching element Q 1 can be directed to be lower than the frequency at the above-mentioned second predetermined level (Claim 4). In this control, even when the lower limit of the on-width of the switching element Q1 is a limitation of control, the dimming can be further proceeded, and additionally the on-off frequency of the switching element Q1 can be controlled so as not to vary as much as possible even when the dimming is further proceeded.

In the present embodiment, the dimming control circuit 8 has been explained to include a microcomputer; however, if the same function can be realized, it is needless to say that the dimming control circuit 8 may be configured with use of an analog circuit.

In each of the above-mentioned embodiments, an MOSFET is exemplified as the switching element Q1; however, the switching element Q1 is not limited to this, and for example, an IGBT may be employed.

The lighting device of the present invention may be used not only for an illumination fixture but for various types of light source, for example, a backlight of a liquid crystal display and a light source of a projector lamp.

In the explanation of each of the above-mentioned examples, a light emitting diode is exemplified as the solid light source 3; however, the solid light source 3 is not limited to this, and may be an organic EL element, a semiconductor laser element, and the like.

### [Description of Reference Numerals]

- Q1: Switching element
- L1: Inductor
- 1: Direct-current power source circuit part
- 2: Current control part
- 3: Solid light source (LED)
- 4: Current detection part
- 5: Dimmer

## Claims

1. A solid light source lighting device comprising:
a direct-current power source circuit part (1) having an inductor (L1) comprising a primary winding (n1) and a secondary winding (n2), the secondary winding being connected in series to a switching element (Q1) for performing a power conversion to an input direct-current power source (Vdc) by means of the inductor (L1) and the switching element (Q1); and supplying a current to a solid light source (3) by means of charging and discharging currents of the inductor (L1);
a current control part (2) including a controlling integrated circuit (6) for controlling the switching element (Q1) so as to dim a current flowing to the solid light source (3);
the controlling integrated circuit (6) having a gate drive terminal (GD) outputting a gate drive signal of High/Low for controlling the switching element (Q1) to be on/off;
the controlling integrated circuit (6) having a zero cross detection terminal (ZCD) for controlling the switching element (Q1) to be on when detecting disappearance of a voltage of the secondary winding (n2) of the inductor (L1); and
the controlling integrated circuit (6) having a peak current setting terminal (Ip) and being adapted to set a predetermined current threshold value (Ip1, Ip2, Ip3) depending on a dimming signal (Vdim) supplied from a dimmer (5) to the peak current setting terminal (Ip);
wherein a first switching control means is provided by the controlling integrated circuit (6)adapted to vary an on-width of the switching element (Q1) until the current reaches the predetermined current threshold value (Ip1,Ip2,Ip3);
**characterized by**:
the secondary winding (n2) of the inductor (L1) being connected with the zero cross detection terminal (ZCD) of the controlling integrated circuit (6) via a diode (D2);
a timer circuit (7) and a further diode (D3) being connected between the gate drive terminal (GD) and the zero cross detection terminal (ZCD), so that the diodes (D2, D3) constitute an OR circuit;
and
wherein a second switching control means is provided by the timer circuit (7) adapted to control an on-timing of the switching element (Q1);
wherein the second switching control means is adapted to vary a time from a zero cross of the discharging current of the inductor (L1) until turning-on of the switching element (Q1), the second switching control means is adapted to set the time to be substantially same time until the level of dimming reaches a predetermined level, and the second switching control means is adapted to operate to direct the time to be longer after the level exceeds the predetermined level; and
wherein the timer circuit (7) limits the maximum value of the on-off frequency of the switching element (Q1) by either limiting the minimum value of a on-off period or by limiting the minimum value of the off time of the switching element (Q1).

2. The solid light source lighting device according to claim 1, wherein
the first switching control means is adapted to operate after the level of dimming exceeds a predetermined level, so that the on-width is
substantially same as the on-width at the predetermined level, and the second switching control means is adapted to , vary the time from the zero cross of the discharging current to turning-on of the switching element (Q1) after the level of dimming exceeds the predetermined level so that the on-off frequency of the switching element (Q1) is substantially same as the on-off frequency of the switching element (Q1) at the predetermined level.

3. The solid light source lighting device according to claim 1, wherein
the first switching control means is adapted to operate after the level of dimming exceeds a predetermined level, so that the on-width is substantially same as the on-width at the predetermined level, and the second switching control means is adapted to , vary the time from the zero cross of the discharging current to turning-on of the switching element (Q1) after the level of dimming exceeds the predetermined level so that the on-off frequency of the switching element (Q1) is lower than the on-off frequency of the switching element (Q1) at the predetermined level.

4. The solid light source lighting device according to claim 1 or claim 2, wherein
in addition to the predetermined level of dimming, a second predetermined level of dimming is given, wherein at the second predetermined level of dimming a lower light flux than the predetermined level is obtained;
the second switching control means is adapted to vary the time from the zero cross of the discharging current to turning-on of the switching element (Q1) after the level of dimming exceeds the predetermined level so that the on-off frequency of the switching element (Q1) is substantially same as the on-off frequency at the predetermined level;
the first switching control means is adapted to operate so that the on-width is substantially same as the on-width at the second predetermined level when the level of dimming exceeds a second predetermined level, and the second switching control means is adapted to vary the time from the zero cross of the discharging current to turning-on of the switching element (Q1) when the level of dimming exceeds a second predetermined level, so that the on-off frequency of the switching element (Q1) is directed to be lower than the on-off frequency at the second predetermined level.

5. The solid light source lighting device according to any one of claims 1 to 4, wherein
the second switching control means is adapted to set the time from the zero cross of the discharging current to turning-on of the switching element (Q1) to be substantially zero until the level of dimming reaches the predetermined level.

6. An illumination fixture comprising the solid light source lighting device according to any one of claims 1 to 5.

## Patentansprüche

1. Festkörperlichtquellenbeleuchtungseinrichtung aufweisend:
einen Gleichspannungsschaltungsteil (1) mit einer Spule (L1) aufweisend eine Primärwicklung (n1) und eine Sekundärwicklung (n2), wobei die Sekundärwicklung in Reihe mit einem Schaltelement (Q1) geschaltet ist zur Durchführung einer Leistungswandlung für einen Eingang einer Gleichspannungsquelle (Vdc) mittels der Spule (L1) und dem Schaltelement (Q1); und Zuführen eines Stromes zur Festkörperlichtquelle (3) mittels Lade- und Entladeströme der Spule (L1);
einen Stromsteuerteil (2) aufweisend einen integrierten Steuerschaltkreis (6) zur Steuerung der Schaltelements (Q1), um einen zu der Festkörperlichtquelle (3) fließenden Strom zu dimmen;
wobei der integrierte Steuerschaltkreis (6) einen Gatetreiberanschluss (GD) aufweist, der ein Gatetreibersignal von digital High/digital Low zur Steuerung des Schaltelements (Q1) ausgibt, um eingeschaltet/ausgeschaltet zu sein;
wobei der integrierte Steuerschaltkreis (6) einen Nulldurchgangsdetektionsanschluss (ZCD) hat, um das Schaltelement (Q1) zu steuern eingeschaltet zu sein, wenn das Nullwerden einer Spannung der Sekundärwicklung (n2) der Spule (L1) detektiert wird; und
wobei der integrierte Steuerschaltkreis (6) einen Spitzenstromvorgabeanschluss (Ip) hat und dazu eingerichtet ist, einen vorgegebenen Stromschwellenwert (Ip1, Ip2, Ip3) abhängig von einem Dimmsignal (Vdim) einzustellen, das dem Spitzenstromvorgabeanschluss (Ip) von einem Dimmer (5) zugeführt wird;
wobei ein erstes Schaltsteuermittel durch den integrierten Steuerschaltkreis (6) bereitgestellt wird, das dazu eingerichtet ist, die Einschaltdauer des Schaltelements (Q1) zu variieren, bis der Strom den vorgegebenen Stromschwellenwert (Ip1, Ip2, Ip3) erreicht;
**gekennzeichnet dadurch:**
**dass** die Sekundärwicklung (n2) der Spule (L1) mit dem Nulldurchgangsdetektionsanschluss (ZCD) des integrierten Steuerschaltkreises (6) über eine Diode (D2) verbunden ist;
**dass** ein Zeitsteuerschaltkreis (7) und eine weitere Diode (D3) zwischen dem Gatetreiberanschluss (GD) und dem Nulldurchgangsdetektionsanschluss (ZCD) angeordnet ist, so dass die Dioden (D2, D3) einen Oder-Schaltkreis bilden; und
wobei ein zweites Schaltsteuermittel durch den Zeitsteuerschaltkreis (7) bereitgestellt ist, das dazu eingerichtet ist, eine Einschaltzeitsteuerung des Schaltelements (Q1) zu steuern;
wobei das zweite Schaltsteuermittel dazu eingerichtet ist, eine Zeit von einem Nulldurchgang des Entladestromes der Spule (L1) bis zum Einschalten des Schaltelements (Q1) zu variieren, wobei das zweite Schaltsteuermittel dazu eingerichtet ist, die Zeit im Wesentlichen mit der Zeit gleichzusetzen, bis das Niveau des Dimmens ein vorgegebenes Niveau erreicht, und wobei das zweite Schaltsteuermittel dazu eingerichtet ist, betrieben zu werden, die Zeit länger vorzugeben nachdem das Niveau das vorgegebene Niveau überschreitet; und
wobei der Zeitsteuerschaltkreis (7) den Maximalwert der Einschalt-Ausschalt-Frequenz des Schaltelements (Q1) begrenzt, entweder durch das Begrenzen des Minimalwerts einer Einschalt-Ausschalt-Periodendauer oder durch Begrenzen des Minimalwerts der Ausschaltzeitdauer des Schaltelements (Q1).

2. Festkörperlichtquellenbeleuchtungseinrichtung nach Anspruch 1, wobei das erste Schaltsteuermittel dazu eingerichtet ist, betrieben zu werden, nachdem das Niveau des Dimmens ein vorgegebenes Niveau überschreitet, so dass die Einschaltzeitdauer im Wesentlichen dieselbe ist wie die Einschaltzeitdauer bei dem vorgegebenen Niveau und wobei das zweite Schaltsteuermittel dazu eingerichtet ist, die Zeit von dem Nulldurchgang des Entladestromes bis zum Einschalten des Schaltelements (Q1) zu variieren, nachdem das Niveau des Dimmens das vorgegebene Niveau überschreitet, so dass die Einschalt-Ausschalt-Frequenz des Schaltelements (Q1) im Wesentlichen dieselbe ist wie die Einschalt-Ausschalt-Frequenz des Schaltelements (Q1) bei dem vorgegebenen Niveau.

3. Festkörperlichtquellenbeleuchtungseinrichtung nach Anspruch 1, wobei das erste Schaltsteuermittel dazu eingerichtet ist betrieben zu werden, nach dem das Niveau des Dimmens ein vorgegebenes Niveau überschreitet, so dass die Einschaltzeitdauer im Wesentlichen dieselbe ist wie die Einschaltzeitdauer bei dem vorgegebenen Niveau und wobei das zweite Schaltsteuermittel dazu eingerichtet ist die Zeit vom Nulldurchgang des Entladestromes bis zum Einschalten des Schaltelements (Q1) zu variieren, nachdem das Niveau des Dimmens das vorgegebene Niveau überschreitet, so dass die EinschaltAusschalt-Frequenz des Schaltelements (Q1) kleiner ist als die Einschalt-Ausschalt-Frequenz des Schaltelements (Q1) bei dem vorgegebenen Niveau.

4. Festkörperlichtquellenbeleuchtungseinrichtung nach Anspruch 1 oder Anspruch 2, wobei
zusätzlich zu dem vorgegebenen Niveau des Dimmens, ein zweites vorgegebenes Niveau des Dimmens gegeben ist, wobei bei dem zweiten vorgegebenen Niveau des Dimmens ein geringerer Lichtstrom erhalten wird als bei dem vorgegebenen Niveau;
wobei das zweite Schaltsteuermittel dazu eingerichtet ist, die Zeit von dem Nulldurchgang des Entladestromes bis zum Einschalten des Schaltelements (Q1) zu variieren, nachdem das Niveau des Dimmens das vorgegebene Niveau überschreitet, so dass die Einschalt-Ausschalt-Frequenz des Schaltelements (Q1) im Wesentlichen die gleiche ist wie die Einschalt-Ausschalt-Frequenz bei dem vorgegebenen Niveau;
wobei das erste Zeitsteuermittel dazu eingerichtet ist betrieben zu werden, so dass die Einschaltzeitdauer im Wesentlichen dieselbe ist wie die Einschaltzeitdauer bei dem zweiten vorgegebenen Niveau, wenn das Niveau des Dimmens ein zweites vorgegebenes Niveau überschreitet, und wobei das zweite Schaltsteuermittel dazu eingerichtet ist die Zeit von dem Nulldurchgang des Entladestromes bis zum Einschalten des Schaltelements (Q1) zu variieren, wenn das Niveau des Dimmens ein zweites vorgegebenes Niveau überschreitet, so dass die Einschalt-Ausschalt-Frequenz des Schaltelements (Q1) gesteuert ist geringer zu sein als die Einschalt-Ausschalt-Frequenz bei dem zweiten vorgegebenen Niveau.

5. Festkörperlichtquellenbeleuchtungseinrichtung nach irgendeinem der Ansprüche 1 bis 4, wobei
das zweite Schaltsteuermittel dazu eingerichtet ist, die Zeit von dem Nulldurchgang des Entladestromes bis zum Einschalten des Schaltelements (Q1) im Wesentlichen auf Null zu setzen, bis das Niveau des Dimmens das vorgegebene Niveau erreicht.

6. Beleuchtungsvorrichtung aufweisend die Festkörperlichtquellenbeleuchtungseinrichtung nach irgendeinem der Ansprüche 1 bis 5.

## Revendications

1. Dispositif d'éclairage à source de lumière solide comprenant :
une partie de circuit de source d'alimentation à courant continu (1) comportant une inductance (L1) comprenant un enroulement primaire (n1) et un enroulement secondaire (n2), l'enroulement secondaire étant connecté en série à un élément de commutation (Q1) pour réaliser une conversion d'énergie vers une source d'alimentation à courant continu d'entrée (Vdc) au moyen de l'inductance (L1) et de l'élément de commutation (Q1) ; et fournir un courant à une source de lumière solide (3) au moyen de courants de charge et de décharge de l'inductance (L1) ;
une partie de commande de courant (2) comprenant un circuit intégré de commande (6) pour commander l'élément de commutation (Q1) afin de régler un courant circulant vers la source de lumière solide (3) ;
le circuit intégré de commande (6) ayant une borne de pilotage de grille (GD) qui délivre un signal de pilotage de grille de valeur Haute/Basse pour commander l'état passant/bloqué de l'élément de commutation (Q1) ;
le circuit intégré de commande (6) ayant une borne de détection de passage par zéro (ZCD) pour commander l'élément de commutation (Q1) de façon qu'il soit passant lorsqu'est détectée la disparition d'une tension de l'enroulement secondaire (n2) de l'inductance (L1) ; et
le circuit intégré de commande (6) ayant une borne d'établissement de courant de crête (Ip) et étant adapté pour établir une valeur de seuil de courant prédéterminée (Ip1, Ip2, Ip3) dépendant d'un signal de réglage (Vdim) fourni par un gradateur (5) à la borne d'établissement de courant de crête (Ip) ;
dans lequel un premier moyen de commande de commutation est fourni par le circuit intégré de commande (6) adapté pour faire varier une largeur d'allumage de l'élément de commutation (Q1) jusqu'à ce que le courant atteigne la valeur de seuil de courant prédéterminée (Ip1, Ip2, Ip3) ;
**caractérisé en ce que** :
l'enroulement secondaire (n2) de l'inductance (L1) est connecté à la borne de détection de passage par zéro (ZCD) du circuit intégré de commande (6) par l'intermédiaire d'une diode (D2) ;
un circuit de temporisation (7) et une autre diode (D3) sont connectés entre la borne de pilotage de grille (GD) et la borne de détection de passage par zéro (ZCD), de telle manière que les diodes (D2, D3) constituent un circuit OU ;
et dans lequel un deuxième moyen de commande de commutation est fourni par le circuit de temporisation (7) adapté pour commander un temps d'allumage de l'élément de commutation (Q1) ;
dans lequel le deuxième moyen de commande de commutation est adapté pour faire varier un temps allant d'un passage par zéro du courant de décharge de l'inductance (L1) à un état passant de l'élément de commutation (Q1), le deuxième moyen de commande de commutation est adapté pour établir le temps de telle façon qu'il soit substantiellement le même temps jusqu'à ce que le niveau de gradation atteigne un niveau prédéterminé, et le deuxième moyen de commande de commutation est adapté pour fonctionner pour faire en sorte que le temps soit plus long après que le niveau a dépassé le niveau prédéterminé ; et
dans lequel le circuit de temporisation (7) limite la valeur maximale de la fréquence passant-bloqué de l'élément de commutation (Q1) soit en limitant la valeur minimale d'une période passant-bloqué, soit en limitant la valeur minimale du temps bloqué de l'élément de commutation (Q1).

2. Dispositif d'éclairage à source de lumière solide selon la revendication 1, dans lequel le premier moyen de commande de commutation est adapté pour fonctionner après que le niveau de gradation a dépassé un niveau prédéterminé, de sorte que la largeur d'allumage est substantiellement la même que la largeur d'allumage au niveau prédéterminé, et le deuxième moyen de commande de commutation est adapté pour faire varier le temps allant du passage par zéro du courant de décharge au passage à l'état passant de l'élément de commutation (Q1) après que le niveau de gradation a dépassé le niveau prédéterminé, de sorte que la fréquence passant-bloqué de l'élément de commutation (Q1) est substantiellement la même que la fréquence passant-bloqué de l'élément de commutation (Q1) au niveau prédéterminé.

3. Dispositif d'éclairage à source de lumière solide selon la revendication 1, dans lequel le premier moyen de commande de commutation est adapté pour fonctionner après que le niveau de gradation a dépassé un niveau prédéterminé, de sorte que la largeur d'allumage est substantiellement la même que la largeur d'allumage au niveau prédéterminé, et le deuxième moyen de commande de commutation est adapté pour faire varier le temps allant du passage par zéro du courant de décharge au passage à l'état passant de l'élément de commutation (Q1) après que le niveau de gradation a dépassé le niveau prédéterminé, de sorte que la fréquence passant-bloqué de l'élément de commutation (Q1) est inférieure à la fréquence passant-bloqué de l'élément de commutation (Q1) au niveau prédéterminé.

4. Dispositif d'éclairage à source de lumière solide selon la revendication 1 ou 2, dans lequel :
en plus du niveau prédéterminé de gradation, un deuxième niveau prédéterminé de gradation est donné, dans lequel au deuxième niveau prédéterminé de gradation, on obtient un niveau de flux lumineux inférieur à celui du niveau prédéterminé ;
le deuxième moyen de commande de commutation est adapté pour faire varier le temps allant du passage par zéro du courant de décharge au passage à l'état passant de l'élément de commutation (Q1) après que le niveau de gradation a dépassé le niveau prédéterminé, de sorte que la fréquence passant-bloqué de l'élément de commutation (Q1) est substantiellement égale à la fréquence passant-bloqué au niveau prédéterminé ;
le premier moyen de commande de commutation est adapté pour fonctionner de telle manière que la largeur d'allumage est substantiellement la même que la largeur d'allumage au deuxième niveau prédéterminé quand le niveau de gradation dépasse un deuxième niveau prédéterminé, et le deuxième moyen de commande de commutation est adapté pour faire varier le temps allant du passage par zéro du courant de décharge au passage à l'état passant de l'élément de commutation (Q1) quand le niveau de gradation dépasse un deuxième niveau prédéterminé, de telle façon que la fréquence passant-bloqué de l'élément de commutation (Q1) soit inférieure à la fréquence passant-bloqué au deuxième niveau prédéterminé.

5. Dispositif d'éclairage à source de lumière solide selon l'une quelconque des revendications 1 à 4, dans lequel le deuxième moyen de commande de commutation est adapté pour établir le temps allant du passage par zéro du courant de décharge au passage à l'état passant de l'élément de commutation (Q1) de telle manière qu'il soit substantiellement nul jusqu'à ce que le niveau de gradation atteigne le niveau prédéterminé.

6. Elément d'éclairage comprenant le dispositif d'éclairage à source de lumière solide selon l'une quelconque des revendications 1 à 5.
